# EUROPEAN PATENT APPLICATION

(11) **EP 3 587 080 A1**
(43) Date of publication of application: **01.01.2020**
(21) Application number: 18181049.0
(22) Date of filing: 30.06.2018
(51) Int. Cl.: B29C 64/35, B29C 71/00, B29K 77/00

(54) **METHOD FOR TREATMENT OF ELEMENTS OBTAINED BY AN ADDITIVE MANUFACTURING PROCESS**

(71) Applicant: Technische Universität München, 80333 München (DE)
(72) Inventor: Abstreiter, Tobias, 80333 München (DE)
(74) Representative: Hoefer & Partner Patentanwälte mbB

(57) **Abstract**

A method for treatment of polyamide comprising elements obtained by an additive manufacturing process comprises a) applying on the element nitric acid for a period up to about 45 min at a temperature in the range from about 0°C to about 65°C; b) applying an aqueous solution on the element obtained in step a) for a period of at least 1 sec at a temperature in the range from about 0°C to about 100°C; c) optionally applying a functionalizing solution comprising at least one functionalizing agent on at least a portion of the element obtained in step b) for a period of at least 5 min at a temperature of at least about 20°C; d) optionally applying a finishing solution comprising an acid, salt or an alcohol.

## Description

The present invention is concerned with a method for treatment of polyamide comprising elements obtained by an additive manufacturing process.

Additive processes for preparing elements for various applications have become very popular. Additive processes, also known as three-dimensional (3D) printing processes are available in different forms starting from building materials in liquid, viscous, solid or powder form. One type of 3D printing processes uses building material in powder form which is selectively solidified by first sintering, melting, fusing, or binding the powder at selected sites for producing elements. Elements are built by depositing powdery material layer after layer. The building material can be a polymer, metal, ceramic , or a composite material. One class of polymers that is useful for additive manufacturing is the class of polyamide polymers and polyamide blends. An element is formed by applying a layer of material in powder form to a building platform, and then based on computer generated data the powder in those parts of the layer which shall become part of the element, is selectively heated or bonded, for example the powder is fused or melted by infrared radiation, sintered by a laser beam, or is bonded by a binder material. The platform is then lowered, another layer of material in powder form is added and again melted, fused, or bonded. These steps are repeated until the element has been built.

Selective heating can be obtained by laser beam, as for example in selective laser sintering (SLS), or by infrared radiation, such as in multi-jet fusion (MJF) processes. Selective solidifying can be obtained by binder-jetting processes among others. The main principle of these solidifying processes is the use of a powder which is treated to solidify at predetermined sites to yield the product. Additive sintering processes are particularly useful for producing elements with delicate structures, fine channels and/or complex forms. Although additive manufacturing processes as known in the art are very useful because they save time and cost compared to manufacturing processes using traditional methods, one disadvantage of these very useful techniques is that the surface smoothness of the obtained objects is not satisfying.

Building materials used in additive processes are often polymers and the quality of the elements obtained in these processes depends from the polymer used. A class of polymers that is highly desirable for additive manufacturing is polyamide, a highly robust polymer which is resistant to the environment, and has good mechanical properties. Therefore, polyamide in powder form is a useful building material and is used in multi-jet fusion (MJF) and selective laser sintering (SLS) processes.

One disadvantage when using additive manufacturing processes for producing elements is that the surface of the elements obtained has a surface roughness Rₐ which, depending from the manufacturing process used, can be in the range of up to 10 µm or even up to 20 µm. Therefore, for many applications it is necessary to smoothen the surface before the elements can be used. Methods for smoothening the surface are known, but all have disadvantages and are detrimental to the structure and/or mechanical strength of the elements.

US 2017/0327658 discloses a process for surface treatment of an object wherein the object is dipped in concentrated acid to impregnate the surface and then is heated to a temperature between 140 and 180°C, until melting of the surface is obtained. This treatment is very harsh and can result in formation of holes or cracks in the surface.

DE 10 2014 102 137 discloses a process for treatment and dyeing of surfaces wherein an object is dipped in a hot solution comprising a dye for up to 6 hours wherein the dye solution has a temperature between 60 and 180°C. The process comprises at least three steps wherein in a first step the objects are pretreated by milling, grinding, or polishing. After this step formic acid vapor can be applied to further smoothen the surface. In a second step the elements are dyed by using a mixture of dye and water having a temperature of at least 60° and up to 180°C. In a third step the surface of the object is impregnated and/or sealed by applying a polymer solution. This process has disadvantages. Mechanical treatment such as milling, grinding and polishing, and the use of formic acid at high temperatures, can damage or deteriorate elements or parts thereof. Such treatment is particularly undesirable for elements having delicate parts, channels, holes etc., because those parts or sites can be destroyed or at least impaired or damaged. On the other hand, the use of formic acid vapor is undesirable; precautions have to be taken to avoid that formic acid vapor escapes into the atmosphere.

As on the one hand elements obtained by additive manufacturing processes are very promising and are produced in increasing amounts, and on the other hand a high quality surface is necessary, it was an object of the present invention to provide a process for smoothening, refining or finishing the surface of an element obtained by an additive manufacturing process which does not or essentially not damage the surface, maintains the complexity of the structure and form of the element, can be carried out in short time and avoids the use of milling, grinding, and polishing steps and also the use of high temperatures.

It was found that it is possible to provide polyamide comprising elements obtained by an additive manufacturing process with a smooth surface by treating the elements with a process comprising at least two steps, as defined in claim 1, which allows to smoothen surfaces in elements with very delicate parts, with high complexity, with channels, holes and fine structures in a time and cost effective way. The parts have high quality and the mechanical strength is not impaired by the method of the present invention. Only by using at least steps a), and b) a smooth surface can be obtained.

The method of the present invention can be used for elements that have been obtained by additive manufacturing processes, wherein a polymer, such as polyamide, is used as building material to form an element. The elements are built as described above, for example by using an energy source like a laser or infrared radiation to create a solid structure from a powder. The powder bed supports the elements which allows to prepare very delicate structures by this technique.

The method as defined in the claims is versatile and allows to adapt the conditions according to the properties that are desirable for an element. Moreover, the method of the present invention has an influence on the color of the elements to be treated and allows to get white, black, or colored elements by adapting the conditions of the treatment as will be explained below.

### Definitions

The term "additive manufacturing" as it is used in the present application, refers to a process where polyamide is first melted, fused, sintered, or bonded and then solidified at predetermined sites. In other words, it is a process, where a polyamide is selectively formed into a solid material. In particular, the term "additive manufacturing" as it is used in the present application, refers to a process where a polymer powder is solidified in a predetermined shape or pattern to build an object or element.

The term "element" when used in this application refers to a product that has been obtained by additive manufacturing with polyamide, in particular with polyamide powder as building material.

The term "polyamide" comprises one type of polyamide or a mixture of two or more types of polyamide as well as polyamide blends.

The term "polyamide powder" comprises one type of polyamide powder or a powder mixture of two or more types of polyamide as well as polyamide blends, i.e. blends of one or more polyamide powders with other powders, like other polymer powders, metal powders, ceramic powders, fibers, etc.

When a temperature is indicated for application of a liquid, the temperature refers to the temperature of this liquid. The application of a "liquid at x°C" means that the liquid has the temperature when it is applied and that the temperature of the liquid is maintained for the indicated time period, for example by heating means, such as a heating bath.

When the term "applying" or "application" is used with regard to the treatment with nitric acid or a solution, this shall mean that the liquid is applied to the element such that the element is fully or partially wetted or contacted by the liquid. This can be obtained by means as known to the skilled person, for example by dipping elements into the liquid such that the element is fully surrounded by the liquid or such that selected parts are wetted by the liquid. This can be obtained by laying elements in wells or containers and filling the wells or containers with the liquid or in any other mode that is known to the skilled person. Applying a solution can also be in the form of vapor. It is important that the liquid contacts the whole surface of an element and can also flow into channels, holes etc., or, if this intended, contacts selected parts of the surface.

"Solidifying" of a powder can be obtained by fusing, sintering, melting, or binding a powder.

For the sake of conciseness in the following the term "sintering" can be understood to also comprise melting, fusing, or binding, when the context does not tell otherwise.

The surface roughness of a material or element refers to the texture on the surface. It is quantified by deviations in the profile, i.e. deviations in a direction that is normal to the surface. Measured values for the profile result from scanning the actual profile with a probe. Surface imperfections, such as cracks, scratches and dents, should not be part of the profile and should not be included in the measured value. Roughness parameters that are usually used are Rₐ - arithmetical mean roughness value, wherein the arithmetical mean of the absolute values of the profile deviations from the mean line of the roughness profile is measured, or R_{z} - mean roughness depth, where the mean value of i (usually i=5) profile deviations from i sampling length is measured.

In the present application, when it is referred to surface roughness, this refers to Rₐ values, i.e. arithmetical mean roughness values except the context tells otherwise.

Any type of pure water, like demineralized water, deionized water, or distilled water is also referred to as E-water.

The term "functionalizing agent" refers to an agent that adds or introduces a function to the element or the surface of the element, respectively. The function can be a chemical, physical, esthetical etc. function. A functionalizing solution is a solution comprising at least one functionalizing agent.

The term "base" refers to an inorganic or organic compound that is soluble in water and when dissolved in water yields a solution with a pH of greater than 7. Examples are hydroxides of alkali and alkaline earth metals.

A step as defined in the claims can be applied in one, two, or more runs, wherein "applied in one, two, or more runs" or carried out in one, two, or more runs" means that a processing step as defined is applied once, twice or more times, wherein each run can be the same or different than another run of this step.

The method of the present invention can have an influence on the color of the element. These white elements treated by the method of the present invention are based on polyamide as building material. Polyamide powder usually is white and, thus, elements for example produced by SLS are also white. The elements by treating them with the method of the present invention can become off-white or get a yellowish tone.

Elements obtained with an MJF process usually are grey, the basic polyamide material is white but carbon black is added to improve the heating by infrared radiation and a white material is added to provide for accurate contours. Surprisingly, when treating elements obtained by MJF with the method of the present invention, the elements at the surface become off-white to white. These elements can be dyed in many different tones because of their white or nearly white surface and because the surface layer has not been densified by mechanical treatment.

The favorable results are obtained only by using at least steps a) and b) of the method of the present invention. It has surprisingly been found that the surface of elements can be smoothened by first applying nitric acid on an element and thereafter removing it by applying an aqueous solution. By configuring concentration of nitric acid, temperatures and time periods of application and composition of the aqueous solution optimal results can be obtained.

The first step is important for smoothening the surface and/or for those elements, that have a grey color, for changing the color of the element to black or white. The surface layer becomes softer and smoother. In the following steps the acid is removed in a manner that maintains smoothness, does not impair the elements and their surface hardens again. For those elements that are grey because they comprise carbon black, the color changes during the treatment, but only in the upmost layer. When treated with nitric acid the surface becomes black, when the nitric acid has been removed and the surface has been in contact with water it becomes off-white to white. The surface becomes brighter when at the end it is treated with a finishing solution comprising alcohol, acid or salt.

In a first step, step a), elements obtained by additive manufacturing are treated with nitric acid for a period of up to about 45 minutes, for example from about 1 to about 30 minutes at a temperature in the range of about 0°C to about 65°C, such as 10 to 55°C or 20 to 40°C. It has been found that concentrated nitric acid when used for a time period of at least 1 minute and at a temperature below 70°C provides for a smoothened surface without or essentially without damaging the surface or parts of the elements. The lower the temperature is the longer the time period of treatment with nitric acid should be. One advantage of the method of the present invention is, that the method can be used at room temperature or slightly above. On the other hand, treatment can be very fast when a temperature in the range of 60 to 65°C is used.

Nitric acid is useful for smoothening the surface of complex elements, it was found that even channels, holes and delicate parts are smoothened when nitric acid is applied. Nitric acid can be used as long as it is concentrated enough. It has been found that nitric acid at a concentration between 40 and 85% is useful. Beyond 85% nitric acid is too strong and can damage the surface. Although a concentration of less than 40% could be used, this is not strong enough to smoothen the surface in channels and holes in an appropriate time period. When color change is important the application of nitric acid for a very short time can already be sufficient, such as about 1 second to about 30 minutes. When smoothening is also intended, it is useful to apply nitric acid for at least 1 minute, such as within a time period from about 1 to about 45 min. Less than 1 min might not be enough for finalizing the smoothening. More than 45 min can result in damage and destruction. The time period used is also dependent on the application temperature. At lower application temperatures the time period can be longer whereas at higher temperatures the time period should be shorter. For example, when using a temperature in the range of about 10 to about 40°C the application time can be about 5 to about 45 minutes, whereas when using a temperature in the range of about 45 to about 65°C the application time can be in the range of about 1 to about 15 minutes. The skilled artisan can find the optimal combination of temperature and time for a specific type of element by routine experiments.

The method of the present invention allows to carry out the treatment at room temperature or slightly higher. This is an advantage compared to the methods of the prior art where high temperatures have to be used for preparing smooth surfaces. A temperature between 20 and 50°C has been found particularly suitable and the best results are obtained in a temperature range between 30 and 40°C. If a temperature in the range of 30 to 40°C is used, a time period of 10 to 20 min is sufficient to obtain an optimal surface smoothening. For lower temperature the time period can be up to 30 min, whereas for temperatures 40°C a time period of less than 10 min is suitable. Good results are obtained when elements are treated with concentrated (30 to 65%) nitric acid at a temperature of 30 to 40°C for 10 to 20 minutes.

Moreover, it was found that treating an element with concentrated nitric acid at a temperature of less than 10°C, such as 3 to 8°C, for a time period of about 10 to about 30 minutes is not sufficient for achieving a smooth surface, but results in a textured surface, which is like a sandy surface. Thus, if a textured surface is intended, elements can be treated with nitric acid at low temperature.

In most cases an element is treated with nitric acid such that the whole surface is in contact with nitric acid and, thus, is smoothened. If only part of an element shall be smoothened, then only this part should be in contact with nitric acid. This can be achieved by excluding that part of the element that shall remain untreated from contact with nitric acid or by protecting it from contact with nitric acid, for example, by applying a protective layer on that part of the element that shall remain untreated, for example, by applying a layer, like a wax layer or a silicone layer.

Furthermore, as outlined before, treating polyamide elements, such as those obtained by MJF that have a grey color, with nitric acid changes the color of the elements. When elements are contacted with nitric acid for very short time periods, the color of the elements becomes black, when the elements are contacted with an aqueous solution in step b) the color becomes white to off-white. Thus, the method of the present invention is also useful to change the color of elements, as white or off-white elements can be dyed with many different dyes, such as acid dyes, sulfur dyes, dispersion dyes and other dyes that are used for dyeing polyamide, and in many different color tones, hues, tints or shades. It was surprisingly found that even after a very short contact of an element with nitric acid, for example nitric acid having a concentration of 30 to 65 wt.-%, where the time is not sufficient to substantially smoothen the surface, the color changes. As the contact in this case is very short, no or hardly any detrimental effects are obtained.

The skilled person can find the optimal combination of conditions for changing the color of the elements. It has been found that good results are obtained when nitric acid having a concentration of 30 to 65 wt.-% is applied to an element at a temperature in the range of about 5°C to about 65°C. At lower temperatures, such as at temperatures between about 5°C and about 20°C the black color becomes very brillant. Depending on the temperauture applied the time period can be as short as 1 to 5 seconds, for example at a temperature of 30 to 40°C, or 5 seconds or more for lower temperatures. On the other hand after contact with an aqueous solution the elements become white, where the contact time with the nitric acid is about 5 seconds to about 10 seconds or more and the contact with an aqueous solution can be in a range of at least about 1 second up to 30 minutes or more. For step b) any aqueous solution as defined below can be used.

It has been found that applying an aqueous solution two or more times, such as 2 to 5 times, can be favorable. Furthermore, good results can be obtained when step b) is carried out in two or three runs, where the aqueous solution is used at different temperatures, for example in a first round at a temperature of about 20 to about 25°C and in a second round at a temperature of 50°C or above, such as 60 to 75°C, optionally in a third run the temperature can be as in the first or as in the second run. Using two or three runs allows to remove the nitric acid very fast, as in every run fresh solution is applied. The time periods also can differ such as a short first run (within seconds), a medium second run (within some seconds up to a few minutes) and a longer third run (within up to 60 minutes or more).

In one embodiment step b) is applied on elements obtained after step a) for 2 runs, wherein in a first run an aqueous solution, such as water, is applied for a very short time, such as 1 to 20 s, or 3 to 10 s, for example 4 to 8 s, with a temperature between room temperature and 40°C, such as 25 to 35°C, for example 28 to 33°C. This run should take away as much nitric acid as possible. Then a second run of step b) is carried out for a medium time of half a minute up to 30 min, such as 40 s to 15 min, for example 50 s to 5 min. For this second run an aqueous solution, in particular water is used at the same temperature or at a temperature which is slightly higher, such as 5 to 20°C higher, than in the first run. For example an aqueous solution with a temperature of about 30 to about 50°C, such as 35 to 45°C, for example about 38 to 44°C is applied.

It seems that it is preferable to remove nitric acid in step b) as much as possible and as fast as possible. It was found that applying an aqueous solution, in particular water in two or more runs yields good results.

It can also be considered to check the pH value at the surface of an element each step to carry out as many runs as are necessary to increase the pH value to a more neutral range, such as 2 to 6.

Steps c) and d) and pre-treatment and post-treatment steps can be carried out as described below for elements that have been treated only for color change. Those elements that have been treated as described above can be dyed very easily. Acid dyes as well as dispersion dyes can be used in step c) for such elements and many color tones, hues, tints and shades can be obtained that cannot be achieved otherwise with grey elements.

Moreover, it has been found that if it is the intention to change the color of elements only without necessarily smoothening the surface of elements, that instead of nitric acid concentrated formic acid can be used. When contacting elements obtained by MJF that have a grey color with formic acid, which has a concentration of at least 80 wt.-%, in particular 95 to 99 wt.-%, for a time period of at least about 1 minute, such as about 5 to about 60 minutes, for example 10 to 30 minutes, at a temperature in the range of about 55°C to about 65°C, and applying step b) with one or more runs as described above and in detail below, elements having a white color can be obtained. These elements can also be treated with steps c) and/or d) as described in detail below. The elements can be dyed with acid dyes, sulfur dyes or other dyes such as dispersion dyes in many color tones, hues, tints, and shades.

In a second step, step b), the element obtained after application of nitric acid is treated with an aqueous solution, preferably with water.

The aqueous solution used in step b) can be any type of water, for example tap water, pure water, demineralized water, deionized water, distilled water. etc. The aqueous solution can comprise a lower amount, i.e. in an amount of up to 5 wt.-%, of further solvents that are water compatible, for example alkyl alcohols with 1 to 10 carbon atoms like ethanol or isopropanol. The aqueous solution of step b) can also comprise a minor amount of an acid, like acetic acid, phosphoric acid, formic acid, or hydrogen chloride, a minor amount of a salt like an alkali or alkaline earth halogenide, or a minor amount of a base, like an alkali or alkaline earth hydroxide. In a preferred embodiment, E-water, such as distilled water, demineralized or deionized water is used as aqueous solution in step b).

The aqueous solution shall take up the nitric acid from the surface of the element to be treated. It has been found that the application of the aqueous solution is successful if it is carried out with a solution in liquid state, i.e. at a temperature in the range between 0 to 100°C, such as about 10 to about 65°C, for example about 20 to about 55°C. Optimal results are obtained at a temperature of 30 to 45°C. It was surprising that it is sufficient to use a solution in a temperature range which is close to room temperature and that it is not necessary to use high temperature for this treatment step. Moreover, it has been found that optimal results are obtained when the temperature range of this step is about in the same range as that one for the treatment with nitric acid.

Without being bound by theory it is assumed that when treating elements directly after the application of nitric acid with an aqueous solution, not only nitric acid on the surface is removed, but also nitric acid that has been soaked in by the surface of the element or is adsorbed by the surface of the element is extracted. By reducing the amount of nitric acid on and in the surface directly after the smoothening treatment the mechanical or chemical damage is kept to a minimum.

The time period for application of the aqueous solution in step b) can be as short as 1 second, such as 10 or 30 seconds. However, the time period for step b) should be 1 to 5 seconds only in that cases where either step b) is repeated or where step c) and/or step d) follows. A suitable time period for step b) in those cases where no further step is carried out, is at least 5 seconds, for example 30 seconds to 60 minutes, such 3 to 15 minutes. There is no upper limit for the time period except economical reasons. Thus, the elements can be treated with aqueous solution for hours or even days, where the elements will not change except take up water. For economical reasons step b) should be applied for up to about 120 minutes or more, such as up to 30 min or up to 60 minutes. The time period used depends on the temperature of the element and of the aqueous solution, it also depends on further steps. If a functionalizing and/or a finishing step is used, step b) can be shorter. It has been found that a high amount of nitric acid is removed already after dipping elements for just a few seconds. On the other hand, treatment with water for more than 30 min does not provide further advantage. Good results are obtained when a time period of about 30 sec to about 50 min is used, a preferred range is about 2 min to about 10 min. Step b) can be carried out once or several times. For example, step b) can be carried out 2 to 5 times. For example, instead of contacting an element once for 10 minutes with E-water, it can be contacted twice each for 5 minutes with E-water. This might have the benefit that nitric acid is extracted even faster. When step b) is carried out 2 or more times, all runs can be similar, i.e. for the same time and at the same temperature. Different runs can also be applied with different time periods and at different temperatures. For example, step b) can be carried out with 3 runs, where the first run is very short, for example only about 1 second to about 2 minutes, such as 3 to 10 seconds, at a temperature in the range of about 5 to about 40°C, such as 20 to 30°C or just room temperature. This first run can be used to remove the majority of nitric acid very fast. The second run can be applied for a time period in the range of about 1 about 15 minutes, such as for about 1 to 5 minutes, either at the same temperature as the first run or at a higher temperature in the range of about 40 to about 80°C, such as about 70 to about 80°C. The third run can be applied for a longer time period, for example up to about 120 minutes, such as for about 5 to about 30 or about 60 minutes at a temperature as in the first run or as in the second run or any other temperature, for example at 20 to 40°C, such as about 30°C. Any other combination of time periods and temperature can be used, the skilled person can find the optimal combination of conditions by routine experiments.

Elements obtained after step b) have a smooth surface which hardens and is mechanically strong and/or have a white or off-white color. Depending on the type of element, the color of the elements can be white to off-white or yellow. These elements can be used as they are, they can be stored until they are used, or they can be treated further with a functionalizing solution to improve or change the properties, and/or can be treated with a finishing solution to make the surface of the element harder, glossier or more brilliant. Moreover, it has been found that the surface of the elements after treatment according to the present invention in addition has liquid repelling properties and hinders the adhesion of liquid droplets.

In summary, the method of the present invention comprises at least two steps which can be carried out at room temperature or slightly above room temperature in a relatively short time and yield elements of very high quality with a smooth surface and without damage to delicate parts. The use of milling, grinding, or polishing steps or other mechanical treatment steps is avoided and nevertheless a high quality finishing is obtained.

The elements obtained after step b) can be further treated to improve their properties and/or to introduce functionality.

Optionally, a further step b') can be added after step b), in particular for those processes where it is intended to use a dyeing step. It has been found that the application of an aqueous solution comprising a base and/or the application of an aqueous solution comprising a salt after step b) further improves the quality of the elements, in particular the surface of the elements and can have an influence on a dyeing step which follows. Without being bound by theory it is assumed that application of an aqueous solution comprising a base further supports neutralizing of any remaining acid which is still on the surface of an element to be treated. Step b') can be carried out in one, two or more runs, for example 2 runs, which are both similar or different with regard to the aqueous solution used and/or to the time period applied and/or with regard to the temperature. Thus, two runs can be applied with the same aqueous solution but for different time periods and/or at different temperatures.

Every run of step b') can be carried out for a short time or for a longer time, time is not very critical for this step. Moreover, this step can be carried out at temperatures as convenient. It has been found that application of an aqueous solution comprising a base at room temperature yields good results. Therefore, the temperature to be applied for step b') is preferably a temperature in the range of 15 to 40°C, such as 18 to 30°C, for example 20 to 25°C. The time period is not critical and can be in the range of about 1 to about 120 min. Less than 1 min might be too short to improve the results. More than 120 min is possible, but does not add any further advantage. A time period of 30 min to 90 min is useful.

For step b') an aqueous solution comprising a base can be applied. The basic solution can comprise any organic or inorganic base that is compatible with the material of the element and any agent applied, and has no deleterious properties. An inorganic base like sodium or potassium hydroxide is useful. The concentration of the base depends on the base used and its basicity, it can be in a range that does not destroy the element but is high enough to neutralize remaining acid and/or to increase the pH value. An amount of 0.1 to 10 wt.-%, such as 1 to 8 wt.-%, for example 4 to 6 wt.-% has been found useful.

Instead of or in addition to the application of an aqueous solution comprising a base, an aqueous solution comprising a salt can be applied in step b'). It has been found that the application of an aqueous solution comprising a salt for some time improves the quality of the surface of the element. Salts that can be applied for such an aqueous solution are inorganic or organic salts, in particular salts of alkaline and alkaline earth metals. Halogenides are particularly useful. It has been found that alkaline halogenides, such as LiCI, NaCl, CaCl₂ are particularly useful.

Elements obtained after step b) or step b'), respectively, can be used as they are, can be treated with step c) or an intermediate step b"). Step b") is optional and can be carried out after step b) or, if applied, step b') and before step c). Step b") comprises the application of water on the element obtained after step b) or step b'). It has been found that, in particular when a functionalizing agent is applied in step c), the application can be improved by before contacting the elements for a longer period of 30 minutes to 48 hours, such as 6 to 24 hours, for example 10 to 15 hours, with water.

In an optional step c) of the method of the present invention the elements obtained in step b) can be contacted with a functionalizing solution.

A further advantage of the method of the present invention, that in case elements shall be dyed or functionalized in another way or with at least one functionalizing agent, respectively, smoothening and dyeing or functionalizing can be done within the same process, and, thus, very efficient.

In one embodiment of the method of the present invention after steps a) and b) a further step c) is used wherein a functionalizing solution is applied to the element obtained after application of nitric acid and application of an aqueous solution. A functionalizing solution is any solution that provides the surface with positive properties, such as on the appearance, color, smoothness, a hard and/or glossy surface, a deep black surface or a surface in a desired color tone, a finishing agent that provides for a specific texture of the surface, a metal that provides for a surface that can be galvanized afterwards, i.e. a priming layer for galvanization. The functionalizing solution can also comprise fibers or other reinforcing agents, which can either result in a reinforced layer or in a texturized layer. It is also possible to use a plasticizer in the functionalizing solution to provide for a smooth and soft surface. These functionalizing agents can be used as is known to the skilled person, i.e. in concentrations, at temperatures and in time periods that are usually used for such agents. The method of the present invention allows to use such functionalizing agents and to provide functionalized surfaces in an easy way. Thus, the method of the present invention is very versatile and allows the creation of different surfaces as it is desired.

Thus, in one embodiment of the method of the present invention, where not only smoothening but also dyeing of the elements shall be obtained, the functionalizing solution of step c) can be an acidic aqueous solution which additionally comprise an acidic dye. It has been found that elements that have been treated with the method of the present invention can be dyed with good results with acid dyes, dispersion dyes, sulfur dyes or other dyes known for dyeing polyamide, in particular when using acid dyes. Without being bound by theory it is assumed that acid dyes are associated by the amide groups of the polyamide and thereby stay permanently on the surface without being washed away. Thus, a dyed and smooth surface with high quality is obtained. Although other dyes like dispersion dyes can also be used for dyeing elements, acid dyes are particularly suited. Examples for useful dyes are C.I. Acid Red dyes, C.I. Acid Blue dyes, C.I. Acid Yellow dyes, C.I. Acid Black dyes, C.I. Acid Orange dyes, or mixtures thereof, such as CI Acid Red 1, CI Acid Red 138, CI Acid Red 52, CI Acid Blue 40, Nylason red N-2RBL, or mixtures thereof. The acid dyes can for example be used in a concentration of 0.5 to 7.5 wt.-%.

In another embodiment an intermediate step b') or b") is carried out after step b) but before dyeing, wherein an element to be dyed is presoaked in a basic solution and/or a buffer or salt solution at a temperature of about 10 to 50°C, such as 35 to 45°C, for about 1 second to about 120 minutes, such as about 5 to about 90 minutes, for example about 30 to about 60 minutes. The basic solution comprises a base like sodium or potassium hydroxide in an amount of 0.5 to 5 wt.-%, the buffer solution can comprise a buffer like sodium acetate in an amount of 0.5 to 20 wt.-%. The preliminary treatment can improve the application of the dye by reducing the temperature that is necessary for dyeing. It has been found that after a preliminary treatment elements can be dyed at a temperature of least about 40 to about 140°C, for example about 60 to about 100°C, such as 70 to 85°C. Moreover, by reducing the time period necessary to dye it could be avoided that the edges of the element swell. Furthermore, it has been found that when using a intermediate step b') and/or b") the dyeing step can be carried out without using acetic acid for the dye solution. Whereas the results obtained for dyeing without using acetic acid are less satisfying when the dyeing step is applied directly after step b), and therefore acetic acid is used in that case, it is possible to use other dye solutions without acetic acid after pretreatment with step b') or step b").

Furthermore, optionally step d) can be applied to elements obtained after step b) or after step c), i.e. elements that have been smoothened and/or functionalized. In step d) a finishing solution is applied that provides for hardening and further smoothening the surface and for improving color and gloss of the surface, and allows for optimal results.

It has been found that the application of a finishing solution provides for mechanically and esthetically high quality smooth surfaces of the elements and contributes to hardening of the surface. The finishing solution can be an aqueous solution that comprises an acid, a salt, a base or an alcohol. The acid can be acid as used in step b). It has been found that acetic acid is particularly useful in a finishing solution. An alcohol as defined for use in step b) can be used. Moreover, it has been found that the addition of a salt like sodium chloride or a base like sodium hydroxyde in a minor amount can be useful.

The finishing solution is for example an acidic aqueous solution comprising acetic acid, which is applied for at least 5 minutes, such as for a period in the range of 5 min to 24 hours. A time period of about 60 to about 90 min has been found useful. Below 5 min the effect might not be sufficient. An application for more than 90 min can be done but does not provide further advantage. The temperature for this step can be in the range of about 20 to about 40°C, such as room temperature or slightly above. This is a specific advantage of the method of the present invention that the temperature used does not have to exceed more than 40°C to obtain optimal results. These are very gentle conditions to avoid any damage to the elements.

The acidic aqueous solution that can be applied as finishing solution in step d) is for example an aqueous solution which comprises an organic acid, like acetic acid in a concentration in the range of 0.1 to 50 wt.-%, such as 1 to 20 wt.-%. Preferably the acidic aqueous solution comprises 5 to 15 wt.-% acetic acid.

Another option is to use an alcoholic solution as finishing solution. As an alcoholic solution any aqueous solution comprising an alcohol, such as a C₁-C₁₀-alcohol, for example ethanol, isopropanol, or butanol, further improves the quality and the appearance of the surface. The post-treatment with the alcoholic solution results in a hard, glossy and white or off-white surface. The alcoholic solution comprises an alcohol in an amount of about 1 to about 10 wt.-%. It can all comprise a mixture of alcohols wherein the total amount of alcohols is in the range of about 1 to about 10 wt.-%, for example 2 to 8, in particular 3 to 7 wt.-%. Optimal results have been obtained with an amount of alcohol in the range of about 4 to about 6 wt.-%.

Generally, after finalizing the treatment steps a), b), and optionally c) and d), the element is taken out of the device and dried. Any remaining liquid should be removed and the element can be dried as is known to the skilled person, for example by just leaving the element in open air, or by heating, using an air stream or any other means that is usually used for drying elements or components.

The method of the present invention can be carried out with all four steps a) to d). Good results can also be obtained by using only steps a), b) and c), a), b) and d) only a) and b). In one embodiment, after steps a) and b), a functionalizing solution is applied which comprises a colorant, a fiber, a hardening agent, a metallizing agent, a plasticizer, a filler, a finishing agent, after functionalizing the surface, a finishing solution is applied which comprises an alcohol for increasing hardness, gloss and/or improving the quality of the color.

Each of the optional steps can be carried out for a time period of a few seconds up to many hours. The specific time period useful in a specific sequence of steps can be find out by the skilled person using routine experiments. Examples are outlined below. The temperature that is used for steps c) and d) depends on the agent used. It is one advantage of the method of the present invention that for most treatments a temperature close to room temperature can be used, such as a temperature in the range of 20 to 50°C, for example 30 to 40°C. However, for some applications, a higher temperature might be suitable. It has been found that for dyeing a surface a temperature in the range of about 60 to about 100°C is suitable, although it is also possible to use a temperature in the range of up 120°C. A dye composition comprising high concentrated acetic acid and a dye can be used for dyeing within a short period at higher temperature or at a temperature of 70 to 80°C when using a longer time period.. Moreover, it has been found that a post-treatment with an aqueous solution having a temperature in the range of 70 to 85°C allows to get a surface with high quality in a short time. Contacting an element with hot water for a short time surprisingly yields elements with exact contours, whereas it was found that using an aqueous solution with a temperature in the range of about 50 to about 70°C for a longer time can result in elements where the edges are swollen, i.e. the contours are not as accurate.

Furthermore, it has been found that the method of the present invention can be improved by a pre-treatment step which can be carried out before step a), wherein the pre-treatment step comprises impregnating an element for a period of at least 1 minute, for example about 1 minute to about 24 hours or more in an aqueous pre-treatment solution that comprises tap water or E-water and optionally a base, an acid, a buffer, or an alcohol, at a temperature of about 20 to about 50°C. For pre-treated elements time and/or temperature of the treatment with nitric acid can be lowered which avoids damage for the elements, without being bound by theory, it is assumed that by impregnating or presoaking elements allows a faster smoothening action and thereby avoids damage in deeper parts of the element. Elements can be pretreated for even longer time. At least 1 minute is useful to allow soaking of the element, however, otherwise the time is not critical and the elements can for example be stored after having been produced until they are treated.

It has been found that ultrasonic energy can be used to improve contacting elements with a liquid or solution applied in one of steps b), c), or d). Ultrasonic energy can be used for example in a range between 25 and 135 kHz. Although the use of ultrasonic energy in step a) in most cases does not add an advantage, it can be used in cases where ultrasonic energy provides for desired surface properties. It is useful to use ultrasonic energy after a solution has been applied in anyone of steps b) and c) or d), if applicable, and has been in contact with the element for some minutes, such as 10 minutes. Sources for ultrasonic energy are known to the skilled person as are methods for using it, for example an ultrasonic bath. Ultrasonic energy can for example be used to support removal of nitric acid in step b) or for dyeing in step c).

The method of the present invention smoothens the surface of elements that have been obtained by an additive manufacturing process using building material in powder form, where the elements have a roughness Rₐ of the surface of the elements before treatment in the range of 2.5 to 20 µm. By treatment in accordance of the present invention the elements can be smoothened to reduce the roughness by up to about 7 µm, such as about 2 to 5 µm, such that the roughness after treatment is in the range of 0.5 to 5, for example 1 to 3 µm. This smoothening effect can be obtained without mechanical pre-treatment.

It was found that the method of the present invention creates elements with a surface that is liquid repelling and shows an excellent beading effect. This is particularly useful when elements are prepared that are used in processes where the surface of these elements is in contact with fluids because it enhances the flow of fluids. Without being bound by theory it is assumed that by processing elements with the method of the present invention a surface is created which avoids or at least makes it very difficult for a droplet to keep in contact with the surface. This effect is particularly obtained when a finishing solution has been used in a last step.

Furthermore, the method of the present invention has further advantages as the steps can be carried out easily and can be automatized. The elements have high quality and can be used in every field where 3D printed elements are applied. The elements can be used for devices in many fields, on earth, in the sea and in the space.

Some preferred embodiments of the method and the elements of the present invention are disclosed in the following:
1. A method for treatment of polyamide comprising elements obtained by an additive manufacturing process comprising
   a) applying on the element nitric acid for a period up to about 45 min at a temperature in the range from about 0°C to about 65°C;
   b) applying an aqueous solution on the element obtained in step a) for a period of at least 1 sec at a temperature in the range from about 0°C to about 100°C;
   c) optionally applying a functionalizing solution comprising at least one functionalizing agent on at least a portion of the element obtained in step b) for a period of at least 5 min at a temperature of at least about 20°C and/or
   d) optionally applying a finishing solution comprising an acid, salt or an alcohol.
2. The method according to paragraph 1, wherein in step a) nitric acid with a concentration of 40 to 85 weight-% is used.
3. The method of one of the preceding paragraphs, wherein in step a) nitric acid is applied for about 1 second to about 0 min, optionally for about 1 to 5 seconds, or for about 3 to about 30 min. and/or at a temperature in the range from about 20 to about 50°C.
4. The method of one of the preceding paragraphs, wherein the aqueous solution of step b) comprises tap water, pure water, demineralized water, distilled water, or deionized water; and optionally a C1-C10 alcohol, a salt, an inorganic or organic base, a buffer, and/or an inorganic or organic acid having a pKₐ-value of at least 4.
5. The method of one of the preceding paragraphs, wherein in step b) an aqueous solution having a temperature of about 20 to about 50°C is applied on the element for a time period of about 10 to about 240 minutes and thereafter the element is dried.
6. The method of paragraph 5, wherein the aqueous solution of step b) comprises a C1-C10 alcohol and/or about 0.1 to about 5 wt.-% of a salt, wherein optionally the salt is a alkali or alkaline earth halogenide, and/or about 0.1 to about 5 wt.-% of an anorganic or organic acid having a pKₐ-value of at least 4.
7. The method of one of the preceding paragraphs, which comprises additionally step b'), wherein step b') comprises that an aqueous solution comprising a base and/or an aqueous solution comprising a salt is applied in one, two or more runs to an element obtained after step b).
8. The method of paragraph 7, wherein in step b') at least one run with an aqueous solution comprising a base and at least one run with an aqueous solution comprising a salt is applied.
9. The method of one of the preceding paragraphs, which comprises additionally intermediate step b"), wherein step b") comprises that water is applied in one, two or more runs to an element obtained after step b) or step b') for 30 minutes to 48 hours.
10. The method of one of paragraphs 1 to 4 or 7, wherein a functionalizing solution of step c) is applied, which comprises at least one functionalizing agent selected from a colorant, a dye, a fiber, a hardening agent, a metallizing agent, a filler, a base, a finishing agent, and/or a plasticizer.
11. The method of one of the preceding paragraphs, wherein a finishing solution of step d) is applied, wherein the finishing solution comprises an acid, a salt, wherein optionally the salt is a alkali or alkali earth halogenide, a base, a buffer and/or a C1-C10 alcohol.
12. The method of paragraph 10 or 11, wherein in step c) a functionalizing solution having a temperature of about 20 to about 90°C is applied on the element for a time period of about 10 to about 120 minutes and thereafter the element is dried.
13. The method of one of the preceding paragraphs, wherein in step d) the functionalizing solution is a solution which comprises at least one acidic dye, wherein optionally the acidic aqueous solution comprises acetic acid in an amount of 1 to 99 wt.-%.
14. The method of one of the preceding paragraphs, wherein in step d) the finishing solution is aqueous acetic acid with a concentration of 0.1 to 99 wt.-%.
15. The method of one of the preceding paragraphs wherein in step b) after application of the aqueous solution and/or in step c) after application of the functionalizing solution, and/or in step d) ultrasonic energy, optionally in the range of about 25 to about 135 kHz, is applied.
16. The method of one of paragraphs 7 to 15, wherein the acid dye is selected from C.I. Acid Red dyes, C.I. Acid Blue dyes, C.I. Acid Yellow dyes, C.I. Acid Black dyes, C.I. Acid Orange dyes, or mixtures thereof, wherein optionally the dye is at least one of CI Acid Red 1, CI Acid Red 138, CI Acid Red 52, CI Acid Blue 40, Nylason red N-2RBL, or mixtures thereof; wherein optionally the acid dye has a concentration of 0.1 to 7.5 wt.-%.
17. The method of one of the preceding paragraphs, wherein in step d) is applied for post-treating an element obtained in step c) by applying an aqueous solution at a temperature in the range from about 20 to about 40°C for a time period of about 5 min to about 120 min, wherein optionally the aqueous solution comprises an alcohol in an amount of about 2 to about 10 wt.-%; wherein optionally the alcohol is ethanol or isopropanol.
18. The method of one of the preceding paragraphs, wherein the polyamide is polyamide 6, polyamide 6.6, polyamide 11, polyamide 12 or a powder blend comprising polyamide.
19. The method of one of the preceding paragraphs, wherein the element has been obtained by a sintering/melting process, such as a multi-jet fusion process or a binder-jetting process.
20. The method of one of the preceding paragraphs, wherein the roughness Rₐ of the surface of the elements before treatment is in the range of 2.5 to 10 µm.
21. The method of one of the preceding paragraphs, wherein in step b) demineralized, deionized or distilled water is used as aqueous solution and/or wherein in step c) a finishing solution comprising acetic acid is used.
22. The method of one of the preceding paragraphs, wherein in step c) a colorant or dye solution is applied having a temperature in the range of about 60 to about 90°C, wherein the temperature is maintained over the treatment period or is increased continuously or incrementally.
23. The method of one of the preceding paragraphs, wherein in step c) the functionalizing solution is a dye solution comprising 30 to 99% acetic acid.
24. The method of one of the preceding paragraphs, wherein a pre-treatment step is carried out before step a), wherein the pre-treatment step comprises impregnating an element for a period of 1 minute to 24 hours in an aqueous pre-treatment solution that comprises E-water and optionally a base, an acid, a buffer, a salt, or an alcohol, at a temperature of about 20 to about 50°C.
25. The method of one of the preceding paragraphs, wherein after step b), c) or d) respectively, the element is dried.
26. The method of one of the preceding paragraphs, wherein in step a) nitric acid is applied on the element for a period of 1 second to 5 seconds at a temperature in the range from about 5°C to about 40°C.
27. The method of one of the preceding paragraphs, wherein in step a) nitric acid is applied on the element for a period of 1 second to 10 minutes at a temperature in the range from about 5°C to about 40°C.
28. The method of one of the preceding paragraphs, wherein in step a) formic acid is applied on the element instead of nitric acid, for a period of up to 40 minutes at a temperature of 55 to 65°C.
29. An element obtained with a method of one of paragraphs 1 to 28.
30. The element of paragraph 26, having a surface roughness Rₐ of 0.5 to 5 µm.

The invention is further explained by the following examples which are not deemed to be restrictive.

### Example 1

Polyamide elements obtained by MJF having a grey color and having a surface roughness of Rₐ = 9; R_{z} = 50 were treated as follows:
The elements were pretreated by impregnating them in an aqueous/ethanolic solution comprising 5% ethanol and 95% E-water for 24 h, and then drying the elements for 90 minutes.

Then the followings steps were applied:
1.) applying 65% nitric acid at 27°C for 10 minutes
2.) removing the elements from nitric acid and immersing them for 10 seconds in E-water at 40°C
3.) removing the elements from E-water and immersing them in 1% sodium hydroxide at 40°C for 120 minutes
4.) removing the elements from basic solution of step 3) and immersing them in a solution comprising 5% ethanol and 95% E-water for 30 minutes
5.) drying the elements in the air for 12 hours

The application of a liquid "at x°C" means that the liquid has the temperature when it is applied and that the temperature of the liquid is maintained by heating means, such as a heating bath for the indicated time period.

Steps 1) to 5) can be carried out easily and can be automatised.

The elements obtained have clear contours, edges no or mininal rounding of edges, no waviness. The surface has high quality, it is smooth, firm and white. The roughness could be reduced significantly:
Roughness of the element after treatment: Rₐ = 1.7; R_{z} = 10

### Example 2

Polyamide elements obtained by MJF having a grey color and having a surface roughness of Rₐ = 9; R_{z} = 50 were treated as follows:
The elements were not pretreated.

The following steps were applied:
1.)applying 65% nitric acid at 27°C for 12 minutes
2.)removing elements from nitric acid and immersing them in E-water at 40°C for 10 seconds
3.)removing elements from E-water and immersing them in 1% sodium hydroxide at 40°C for 5 minutes
4.)removing elements from basic solution and immersing them in dyeing solution with Nylosan red N-2RBL (4 wt.-% Nylosan red N-2RBL, 86 wt.-% E-Wasser, 10 wt.-% acetic acid 99%) for 90 minutes
   The elements were immersed in the nylosan solution at 30°C, the solution was heated to 90°C with a heating rate of 2°C/min, then maintained at 90°C for 60 minutes, after 90 minutes the elements were cooled to room temperature (about 25°C) at a rate of 5°C/min
5.)removing elements from dyeing solution and immersing them in aqueous solution comprising 5% ethanol and 95% E-water at room temperature for 10 minutes
6.)drying elements in air for 12 hours

These steps can be carried out easily and can be automatized.

The elements obtained after this treatment have clear contours, minimal rounding of edges, no waviness

The surface is smooth, firm and has a red uniform coloring

Roughness after treatment: Rₐ = 1.1; R_{z} = 7

### Example 3 (for comparison)

Polyamide elements obtained by MJF having a grey color and having a surface roughness of Rₐ = 9; R_{z} = 50 were treated with form acid. No pretreatment was carried out. Instead of nitric acid 99% formic acid was used as follows. Four runs were carried out, where the temperature and time for the treatment with formic acid was varied, otherwise all parameters were the same.
1.) Elements were added in four beakers each filled with 99% formic acid at room temperature, the formic acid was heated in four different runs: to 43°C (below flashpoint), 60°C, 65°C, and 70°C, respectively, with a heating rate of about 5°C/minute
2.) the elements were left for 10 minutes in formic acid at temperature of 43°C, 60C, 65°C, or 70°C, respectively
3.) cooling at about 10°C/minute
4.) elements were remvoed from formic acid and immersed in E-water at room temperature for 5 minutes
5.) elements were removed from E-water and immersed in 1% sodium hydroxide for 30 minutes
6.) elements were removed from basic solution and rinsed with water at room temperature
7.) elements were dried at open air for 12 h

It was found that no reaction occurred below the flashpoint of formic acid, i.e. at or below 45°C. The element treated with formic acid at 60°C became white but no smoothening of the surface was identified. The surface of the elements treated with formic acid at 65°C and 70°C was destroyed, there were flakes that could be peeled off. Moreover, peeled off flakes sticked to the delicate parts and in the holes of the elements. The remaining surface was soft. When in contact with E-water in step 5, polyamide fibers were descaled from the surface. and were found floating on the water. Surface roughness after treatment could not be measured because of the eroded surface. Thus, treatment of polyamide elements with formic acid was not useful as treatment at a temperature that did not destroy elements had no effect and at a higher temperature elements were destroyed. In contrast thereto, when using nitric acid with the method of the present invention, the surface of elements is smoothened without detrimental effect.

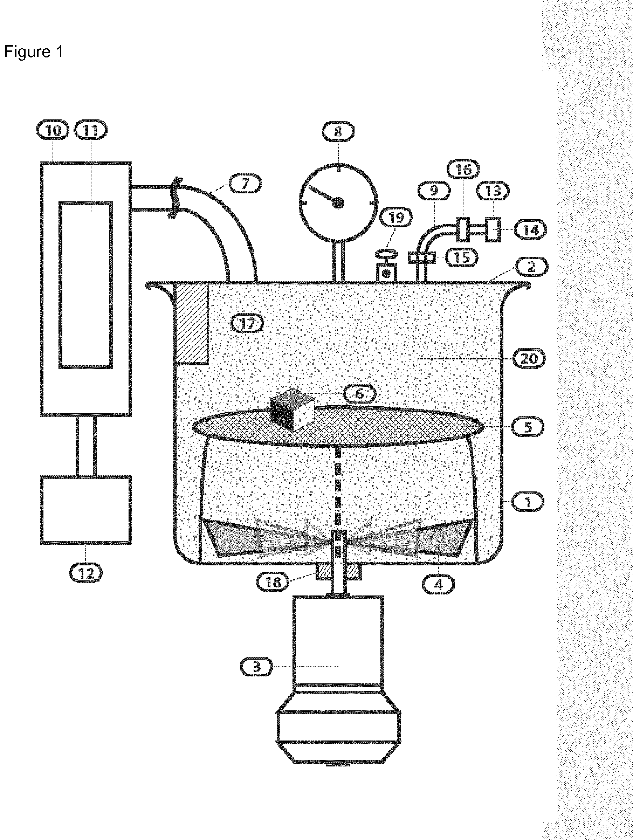

## Claims

1. A method for treatment of polyamide comprising elements obtained by an additive manufacturing process comprising
a) applying on the element nitric acid for a period up to about 45 min at a temperature in the range from about 0°C to about 65°C;
b) applying an aqueous solution on the element obtained in step a) for a period of at least 1 sec at a temperature in the range from about 0°C to about 100°C;
c) optionally applying a functionalizing solution comprising at least one functionalizing agent on at least a portion of the element obtained in step b) for a period of at least 5 min at a temperature of at least about 20°C and/or
d) optionally applying a finishing solution comprising an acid, salt or an alcohol.

2. The method according to claim 1, wherein in step a) nitric acid with a concentration of 40 to 85 weight-% is used.

3. The method of one of the preceding claims, wherein in step a) nitric acid is applied for about 1 second to about 30 min, optionally for about 3 to about 20 min. and/or at a temperature in the range from about 20 to about 50°C.

4. The method of one of the preceding claims, wherein the aqueous solution of step b) comprises tap water, pure water, demineralized water, distilled water, or deionized water; and optionally a C1-C10 alcohol, a salt, an inorganic or organic base, a buffer, and/or an inorganic or organic acid having a pKₐ-value of at least 4.

5. The method of one of the preceding claims, wherein in step b) an aqueous solution having a temperature of about 20 to about 50°C is applied on the element for a time period of about 10 to about 240 minutes and thereafter the element is dried, wherein optionally the aqueous solution of step b) comprises a C1-C10 alcohol and/or about 0.1 to about 5 wt.-% of a salt, wherein optionally the salt is an alkali or alkaline earth halogenide, and/or about 0.1 to about 5 wt.-% of an anorganic or organic acid having a pKₐ-value of at least 4.

6. The method of one of claims 1 to 4, wherein a functionalizing solution of step c) is applied, which comprises at least one functionalizing agent selected from a colorant, a dye, a fiber, a hardening agent, a metallizing agent, a filler, a base, a finishing agent, and/or a plasticizer, and/or wherein in step c) a functionalizing solution having a temperature of about 20 to about 90°C is applied on the element for a time period of about 10 to about 120 minutes.

7. The method of one of the preceding claims, wherein in step c) the functionalizing solution is a solution which comprises at least one acidic dye, and/or wherein the functionalizing solution is an acidic aqueous solution which comprises acetic acid in an amount of 1 to 99 wt.-%.

8. The method of one of the preceding claims, wherein a finishing solution of step d) is applied, wherein the finishing solution comprises an acid, a salt, wherein optionally the salt is an alkali or alkali earth halogenide, a base, a buffer and/or a C1-C10 alcohol.

9. The method of one of the preceding claims, wherein in step d) a finishing solution is applied for post-treating an element obtained in step c) by applying an aqueous solution at a temperature in the range from about 20 to about 40°C for a time period of about 5 min to about 120 min, wherein optionally the aqueous solution comprises an alcohol in an amount of about 2 to about 10 wt.-%; wherein optionally the alcohol is ethanol or isopropanol.

10. The method of one of the preceding claims, wherein the element has been obtained by a sintering/melting process, such as a multi-jet fusion process or a binder-jetting process.

11. The method of one of the preceding claims, wherein in step c) a colorant or dye solution is applied having a temperature in the range of about 60 to about 90°C, wherein the temperature is maintained over the treatment period or is increased continuously or incrementally.

12. The method of one of the preceding claims, wherein in step c) the functionalizing solution is a dye solution comprising 30 to 99% acetic acid.

13. The method of one of the preceding claims, wherein a pre-treatment step is carried out before step a), wherein the pre-treatment step comprises impregnating an element for a period of 1 minute to 24 hours in an aqueous pre-treatment solution that comprises E-water and optionally a base, an acid, a buffer, a salt, or an alcohol, at a temperature of about 20 to about 50°C.

14. The method of one of the preceding claims, wherein after step b), c) or d) respectively, the element is dried.

15. An element obtained with a method of one of claims 1 to 14, wherein optionally the element has a surface roughness Rₐ of 0.5 to 5 µm.
